# EUROPEAN PATENT APPLICATION

(11) **EP 4 464 918 A1**
(43) Date of publication of application: **20.11.2024**
(21) Application number: 22928009.4
(22) Date of filing: 19.04.2022
(51) Int. Cl.: F16K 1/00, F16K 7/17, F16K 1/32, F16K 1/38, F16K 27/02, F16K 31/122

(54) **CUT-OFF VALVE**

(30) Priority: 25.02.2022 CN 202210176380
(71) Applicant: Wuxi Lead Intelligent Equipment Co., Ltd., Wuxi, Jiangsu 214028 (CN)
(72) Inventor: SUN, Yizhou, Wuxi, Jiangsu 214028 (CN); JIANG, Zhongyi, Wuxi, Jiangsu 214028 (CN)
(74) Representative: Rau, Schneck & Hübner Patentanwälte Rechtsanwälte PartGmbB
(86) International application number: PCT/CN2022/087717
(87) International publication number: WO 2023/159732

(57) **Abstract**

Disclosed is a stop valve. The stop valve includes: a valve body, having a valve cavity, and a first flow passage and a second flow passage both in communication with the valve cavity, the first flow passage running through an inner wall of the valve cavity and forming a first communicating port; and a diaphragm disposed in the valve cavity and having a blocking projection on a side facing toward the first communicating port; wherein, the blocking projection has a first conical surface as a peripheral surface thereof, and is of a radial dimension that gradually increases from an end close to the first communicating port to an end away from the first communicating port; the first communicating port has a circumferential edge with a first chamfered slope or a rounded curved surface; the diaphragm can be controlled to drive the blocking projection to move until the first conical surface abuts against the first chamfered slope or the rounded curved surface.

## Description

### TECHNICAL FIELD

The present disclosure relates to the field of battery production equipment, and in particular to a stop valve.

### BACKGROUND

In the production line of lithium battery, electrolyte needs to be injected into the battery, and the flow of electrolyte needs to be controlled by a valve when the electrolyte is injected. Commonly used valves include pinch valves, cone valves, and diaphragm valves.

The diaphragm valves generally seal the liquid inlet on the valve body with a diaphragm so as to close the valve, while the diaphragm leaves the liquid inlet to open the valve. However, the diaphragm has to be opened and closed several times during long-term use, resulting in wear or depression of the diaphragm or the edge of the liquid inlet on the valve body, and thus resulting in a poor sealing and shortened service life.

### SUMMARY

Based on this, it is necessary to provide a stop valve to solve the above-mentioned defects for the problem that the diaphragm has to be opened and closed several times when the diaphragm valves in the prior art are used for long term, resulting in wear or depression of the diaphragm or the edge of the liquid inlet on the valve body, and thus resulting in a poor sealing and a shortened service life.

A stop valve includes:
a valve body, having a valve cavity, and a first flow passage and a second flow passage both in communication with the valve cavity, the first flow passage running through an inner wall of the valve cavity and forming the first communicating port; and
a diaphragm disposed in the valve cavity and having a blocking projection on a side facing toward the first communicating port;
wherein, the blocking projection has a first conical surface as a peripheral surface thereof, and is of a radial dimension that gradually increases from an end close to the first communicating port to an end away from the first communicating port; the first communicating port has a circumferential edge with a first chamfered slope or a rounded curved surface; the diaphragm can be controlled to drive the blocking projection to move until the first conical surface abuts against the first chamfered slope or the rounded curved surface.

In one of the embodiments, a first angle is formed between the first chamfered slope and a central axis of the first communicating port, and a second angle is formed between the first conical surface and the central axis of the first communicating port;
the first angle is greater than the second angle, and a radial dimension of the end of the blocking projection close to the first communicating port is smaller than that of the first communicating port, and a radial dimension of the end of the blocking projection away from the first communicating port is greater than that of the first communicating port.

In one of the embodiments, a first angle is formed between the first chamfered slope and a central axis of the first communicating port, and a second angle is formed between the first conical surface and the central axis of the first communicating port;
the first angle is greater than the second angle, and a radial dimension of the end of the blocking projection close to the first communicating port is greater than that of the first communicating port.

In one of the embodiments, a first angle is formed between the first chamfered slope and a central axis of the first communicating port, and a second angle is formed between the first conical surface and the central axis of the first communicating port;
the first angle is equal to the second angle.

In one of the embodiments, a first angle is formed between the first chamfered slope and a central axis of the first communicating port, and a second angle is formed between the first conical surface and the central axis of the first communicating port;
the first angle is smaller than the second angle.

In one of the embodiments, the inner wall of the valve cavity includes a second conical surface disposed around the first communicating port, and the second conical surface is flared in a direction from the first communicating port to the diaphragm;
the second communicating port is opened on the second conical surface for communication between the valve cavity and the second flow passage, and is positioned below the first communicating port.

In one of the embodiments, the second flow passage includes a second curved section and a second vertical section, and the second curved section at one end thereof communicates with the second communicating port, and communicates at the other end thereof with the second vertical section;
an outer side of the second curved section runs in a circular arc, and an inner side of the second curved section has a diversion surface for diverting medium in the valve cavity into the second vertical section.

In one of the embodiments, the diversion surface is a sloped surface.

In one of the embodiments, the diversion surface is a cambered surface.

In one of the embodiments, the stop valve further includes a driving mechanism disposed on the valve body, and the driving mechanism is in driving connection with the diaphragm so as to drive the diaphragm to move close to or away from the first communicating port.

In one of the embodiments, the driving mechanism includes a housing, a piston, a connecting member, and an elastic member;
the housing is mounted on the valve body and has a piston chamber, the piston is movably disposed in the piston chamber so as to divide the piston chamber into a first chamber close to the diaphragm and a second chamber away from the diaphragm, and the connecting member is connected between the diaphragm and the piston;
the first chamber is configured to be controllably inflated or deflated, and the elastic member is disposed within the second chamber and abuts against the piston to provide an elastic force that causes the piston to have a tendency to move close to the diaphragm.

In one of the embodiments, the stop valve further includes an assembling block disposed between the valve body and the housing, the assembling block and the valve body enclose the valve cavity, and the assembling block, the housing, and the piston enclose the first chamber;
the assembling block is opened with a through hole for communication with the valve cavity and the first chamber, and the through hole is provided for the connecting member to pass through.

In one of the embodiments, one side of the valve body facing toward the assembling block has a first annular press-fitting portion, one side of the assembling block facing toward the valve body has a second annular press-fitting portion, and a periphery of the diaphragm is compressed between the first annular press-fitting portion and the second annular press-fitting portion.

In one of the embodiments, the diaphragm divides the valve cavity into a third chamber facing toward the valve body and a fourth chamber facing toward the assembling block, and the assembling block is opened with a vent hole for communication between the fourth chamber and an external environment.

With regard to the above stop valve, in actual operation, when it is necessary to control the medium entering the first flow passage to flow out from the second flow passage (that is, the stop valve is in an open state), the diaphragm drives the blocking projection to move away from the first communicating port, such that the first conical surface of the blocking projection is separated from the first chamfered slope or the rounded curved surface at the first communicating port, and thus the medium in the first flow passage can enter the valve cavity through the first communicating port, and enter the second flow passage via the valve cavity.

When it is necessary to control the medium entering the first flow passage so that it cannot flow out from the second flow passage (this is, the stop valve is in a closed state), the diaphragm drives the blocking projection to move close to the first communicating port, until the first conical surface of the blocking projection abuts against the first chamfered slope or the rounded curved at the first communicating port so as to close the first communicating port, so that the medium in the first flow passage cannot enter the valve cavity through the first communicating port, and thus cannot flow out from the second flow passage.

In this way, in the stop valve of the present application, by abutting or separating the first conical surface of the blocking projection against or from the first chamfered slope or the rounded curved at the first communicating port so as to close or open the valve, the first chamfered slope or the rounded curved surface can function to guide and buffer the blocking projection, and even if the blocking projection is worn to some extent during long-term use, it is also possible to ensure tight abutment of the first conical surface against the first chamfered slope or the rounded curved surface, thereby achieving a good sealing effect and a long service life.

### BRIEF DESCRIPTION OF THE DRAWINGS

FIG. 1 is a structural schematic view of a stop valve according to an embodiment of the present application (in a valve closed state);
FIG. 2 is a structural schematic view of a stop valve according to an embodiment of the present application (in a valve opened device);
FIG. 3 is a structural schematic view of a valve body and a diaphragm of the stop valve shown in FIG. 1;
FIG. 4 is a structural schematic view of a first conical surface abutting against a first chamfered slope of a diaphragm according to an embodiment of the present application;
FIG. 5 is a structural schematic view of a first conical surface abutting against a first chamfered slope of a diaphragm according to another embodiment of the present application;
FIG. 6 is a structural schematic view of a first conical surface abutting against a first chamfered slope of a diaphragm according to yet another embodiment of the present application;
FIG. 7 is a structural schematic view of a first conical surface abutting against a first chamfered slope of a diaphragm according to yet another embodiment of the present application.

### DETAILED DESCRIPTION

In order to make the above objects, features and advantages of the present application more clearly understood, specific embodiments of the present application will be described in detail below with reference to the accompanying drawings. In a following description, numerous specific details are set forth in order to provide a thorough understanding of the present application. However, the present application can be implemented in many other ways different from those described here, and those skilled in the art can make similar improvements without violating a connotation of the present application. Therefore, the present application is not limited by the specific embodiments disclosed below.

In the description of the present application, it should be understood that, an orientation or positional relationship indicated by terms "center", "longitudinal", "lateral", "length", "width", "thickness", "upper", "lower", "front", "back", "left", "right", "vertical", "horizontal", "top", "bottom", inner", "outer", "clockwise", "counterclockwise", "axial", "radial", "circumferential" is based on the orientation or positional relationship shown in the accompanying drawings, and is only for convenience of describing the present application and simplifying the description, rather than indicating or implying that a device or element referred to must be provided with a particular orientation, be constructed and operate in a particular orientation, and therefore should not be understood as a limitation to the present application.

In addition, terms "first" and "second" are only used for descriptive purposes and should not be understood as indicating or implying relative importance or implying a number of indicated technical features. Therefore, a feature delimited with "first", "second" may expressly or implicitly include at least one of that feature. In a description of the present application, "a plurality" means at least two, such as two, three, etc., unless expressly and specifically defined otherwise.

In the present application, unless expressly specified and limited otherwise, terms "installed", "communicated", "connected", "fixed" and other terms should be interpreted in a broad sense, for example, it can be a fixed connection, a detachable connection, or an integrated; it can be a mechanical connection or an electrical connection; it can be directly connected, or indirectly connected through an intermediate medium, and it can be an internal communication between two elements or an interaction relationship between the two elements, unless otherwise explicitly defined. For those of ordinary skill in the art, specific meanings of the above terms in the present application can be understood according to specific situations.

In the present application, unless expressly stated and defined otherwise, a first feature "on" or "under" a second feature may be that the first feature is in direct contact with the second feature, or the first feature and the second feature are indirectly contacted through an intermediary. In addition, the first feature being "above", "over" and "on" the second feature may mean that the first feature is directly above or obliquely above the second feature, or simply means that the first feature is higher than the second feature in a horizontal direction. The first feature being "below", "under" and "below" the second feature may mean that the first feature is directly below or obliquely below the second feature, or simply means that the first feature is smaller than the second feature in a horizontal direction.

It should be noted that when an element is referred to as being "fixed to" or "arranged on" another element, it can be directly on another element, or an intervening element may also be present. When an element is referred to as being "connected" to another element, it can be directly connected to another element or intervening elements may also be present. Terms "vertical", "horizontal", "upper", "lower", "left", "right" and similar expressions used here are only for a purpose of illustration and do not represent an only embodiment.

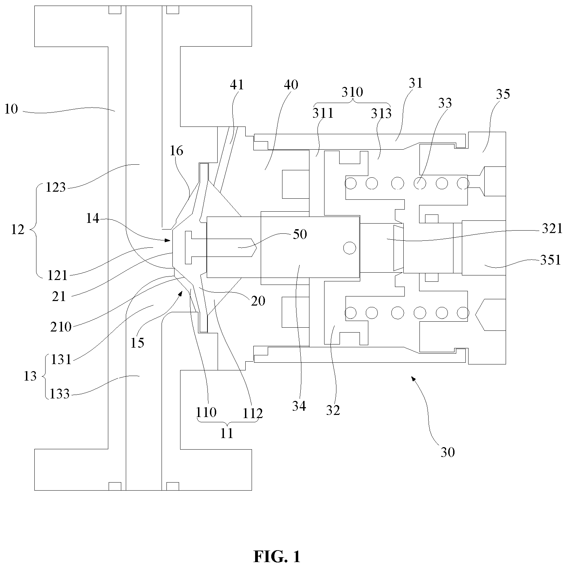

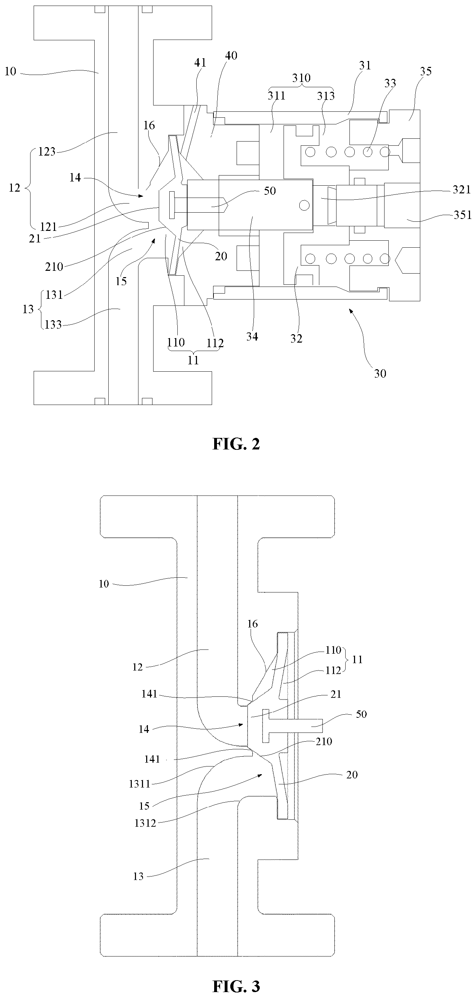

Referring to FIGS. 1 to 3, an embodiment of the present application provides a stop valve, which includes a valve body 10 and a diaphragm 20. The valve body 10 has a valve cavity 11, and a first flow passage 12 and a second flow passage 13 both in communication with the valve cavity 11. The first flow passage 12 penetrates through the inner wall of the valve cavity 11 to form a first communicating port 14. The diaphragm 20 is disposed in the valve cavity 11, and has a blocking projection 21 on the side facing toward the first communicating port 14.

Wherein, the blocking projection 21 has a first conical surface 210 as its circumferential side wall, and the radial dimension of the blocking projection 21 gradually increases from an end close to the first communicating port 14 to an end far away from the first communicating port 14. The circumferential edge of the first communicating port 14 has a first chamfered slope 141 or a rounded curved surface (not shown). The diaphragm 20 can controllably move the blocking projection 21, until the first conical surface 210 of the blocking projection 21 abuts against the first chamfered slope 141 or the rounded curved surface so as to close the first communicating port 14.

With regard to the above stop valve, in actual operation, when it is necessary to control the medium entering the first flow passage 12 to flow out from the second flow passage 13 (that is, the stop valve is in an open state), the diaphragm 20 drives the blocking projection 21 to move away from the first communicating port 14, such that the first conical surface 210 of the blocking projection 21 is separated from the first chamfered slope 141 or the rounded curved surface at the first communicating port 14, and thus the medium in the first flow passage 12 can enter the valve cavity 11 through the first communicating port 14, and enter the second flow passage 13 via the valve cavity 11.

When it is necessary to control the medium entering the first flow passage 12 so that it cannot flow out from the second flow passage 13 (this is, the stop valve is in a closed state), the diaphragm 20 drives the blocking projection 21 to move close to the first communicating port 14, until the first conical surface 210 of the blocking projection 21 abuts against the first chamfered slope 141 or the rounded curved at the first communicating port 14 so as to close the first communicating port 14, so that the medium in the first flow passage 12 cannot enter the valve cavity 11 through the first communicating port 14, and thus cannot flow out from the second flow passage 13.

In this way, in the stop valve of the present application, by abutting or separating the first conical surface 210 of the blocking projection 21 against or from the first chamfered slope 141 or the rounded curved at the first communicating port 14 so as to close or open the valve, the first chamfered slope 141 or the rounded curved surface can function to guide and buffer the blocking projection 21, and even if the blocking projection 21 is worn to some extent during long-term use, it is also possible to ensure tight abutment of the first conical surface 210 against the first chamfered slope 141 or the rounded curved surface, thereby achieving a good sealing effect and a long service life. That is to say, during long-term use, the contact position between the blocking projection 21 and the first chamfered slope 141 or the rounded curved surface will be worn, resulting in a change in the shape of the first conical surface 210 of the blocking projection 21. After wear occurs, however, it is possible to compensate for the influence of wear by adjusting the abutting pressure between the blocking projection 21 and the first chamfered slope 141 or the rounded curved surface, which also achieves a good sealing effect and prolongs the service life.

It should be noted that the above medium may be an electrolyte. Of course, in other embodiments, the medium may also be other fluids, which are not limited herein.

It should be noted that the diaphragm of the prior art is made of metal. On the one hand, when the medium is an electrolyte, since the electrolyte contains impurity particles, the impurity particles tend to generate pits on the surface of the metallic diaphragm under pressure, thereby degrading the sealing effect; on the other hand, the metallic diaphragm tends to suffer from great wear or large depression deformation during long-term use, thereby degrading the sealing effect. As a result, the metallic diaphragm has a relatively short service life and requires frequent shutdowns for replacement, which seriously degrades production efficiency. In one embodiment of the present application, the diaphragm 20 may be made of plastic, such as Teflon material, which makes the diaphragm 20 less prone to generating pits under the action of impurity particles and helps to reduce wear generated during long-term use, thus improving the service life of the diaphragm 20, extending the replacement cycle, and improving production efficiency.

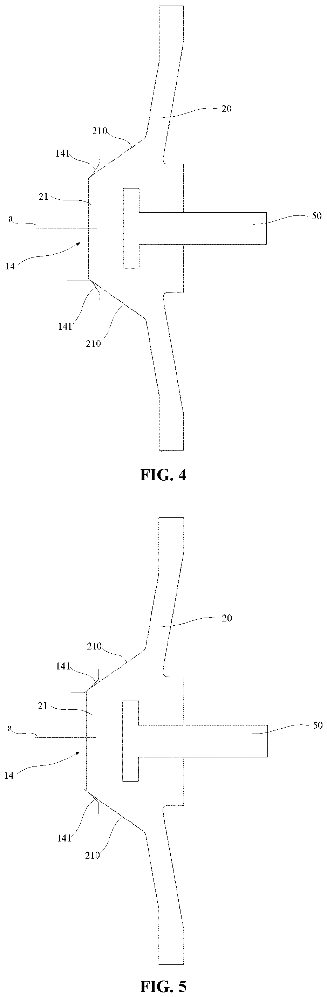

Referring to FIG. 4, in an embodiment of the present application, a first angle is formed between the first chamfered slope 141 and the central axis a of the first communicating port 14. A second angle is formed between the first conical surface 210 and the central axis a of the first communicating port 14.

The first angle is greater than the second angle, the radial dimension of the end of the blocking projection 21 close to the first communicating port 14 is smaller than that of the first communicating port 14, and the radial dimension of the end of the blocking projection 21 away from the first communicating port 14 is greater than that of the first communicating port 14. In this way, when the first communicating port 14 is blocked by the blocking projection 21, the end of the blocking projection 21 with the smaller radial dimension passes over the first chamfered slope 141 and into the first flow passage 12, and At this point, the joint between the first chamfered slope 141 and the inner wall of the first flow passage 12 abuts against the first conical surface 210 of the blocking projection 21 (the two are in line contact), so as to close the first communicating port 14. In case that the blocking projection 21 is worn to some extent due to prolonged service, good abutting condition may still be maintained between the first conical surface 210 of the blocking projection 21 and the first chamfered slope 141, thereby ensuring sealing performance.

Referring to FIG. 5, in another embodiment of the present application, a first angle is formed between the first chamfered slope 141 and the central axis a of the first communicating port 14. A second angle is formed between the first conical surface 210 and the central axis a of the first communicating port 14.

The first angle is greater than the second angle, the radial dimension of the end of the blocking projection 21 close to the first communicating port 14 is greater than that of the first communicating port 14. In this way, when the first communicating port 14 is blocked by the blocking projection 21, the end of the blocking projection 21 with the smaller radial dimension (that is, the end toward the first communicating port 14) does not inter into the first flow passage 12 but abuts against the first chamfered slope 141 directly, so as to close the first communicating port 14. At this point, due to the abutting force between the blocking projection 21 and the valve body 10, the blocking projection 21 can be elastically deformed to some extent, so that the first conical surface 210 of the blocking projection 21 is in surface contact with the first chamfered slope 141, which increases the contact area between the two and thus improves the sealing effect. In case that the blocking projection 21 is worn to some extent due to prolonged service, good abutting condition may still be maintained between the first conical surface 210 of the blocking projection 21 and the first chamfered slope 141, thereby ensuring sealing performance.

It should be noted that when the medium is electrolyte, the existing diaphragm is prone to generate depression deformation, resulting in a poor sealing structure and a shortened service life. Therefore, in the prior art, frequent shutdowns are required to replace the diaphragm, which results in suspending of a whole line and greatly degrades production efficiency, and frequent disassembly and replacement requires a lot of labor. In the present embodiment, on the one hand, the service life of the diaphragm 20 is extended, and the thus the time required to shutdown for replacement is reduced, which greatly increases capacity; on the other hand, since the end of the blocking projection 21 with the smaller radial dimension is in surface contact with the first chamfered slope 141, it is possible to compensate for the pressing force, and even if the blocking projection 21 is worn over long-term use, the two are still in surface contact with each other, but not generates a step due to long-term use, which will lead to the reduction of sealing performance and the failure of diaphragm 20. That is to say, during long-term use, the contact position between the blocking projection 21 and the first chamfered slope 141 may be worn to result in a change in the shape of the first conical surface 210 of the blocking projection 21. After wear occurs, however, it is possible to compensate for the influence of wear by adjusting the abutting pressure between the blocking projection 21 and the first chamfered slope 141, which may also achieve a good sealing effect and prolong the service life.

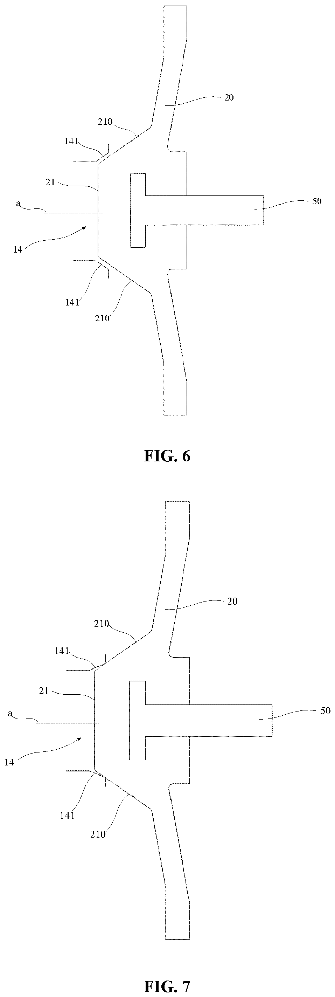

Referring to FIG. 6, in yet another embodiment of the present application, a first angle is formed between the first chamfered slope 141 and the central axis a of the first communicating port 14. A second angle is formed between the first conical surface 210 and the central axis a of the first communicating port 14. Wherein, the first angle is equal to the second angle so that the first conical surface 210 of the blocking projection 21 and the first chamfered slope 141 are parallel to each other. In this way, when the first communicating port 14 is closed by the blocking projection 21, the first conical surface 210 fits perfectly with the first chamfered slope 141. Thus, the first communicating port 14 is closed. At this point, since the first conical surface 210 fits perfectly with the first chamfered slope 141, that is, the two are in surface contact with each other, it is possible to increase the contact area of the two and thus improve the sealing effect. In case that the blocking projection 21 is worn to some extent due to prolonged service, the first conical surface 210 of the blocking projection 21 still fits perfectly with the first chamfered slope 141, so as to ensure the sealing effect.

Referring to FIG. 7, in yet another embodiment of the present application, a first angle is formed between the first chamfered slope 141 and the central axis a of the first communicating port 14. A second angle is formed between the first conical surface 210 and the central axis a of the first communicating port 14. Wherein, the first angle is smaller than the second angle. In this way, when the first communicating port 14 is closed by the blocking projection 21, the end of the first chamfered slope 141 away from the first flow passage 12 abuts against the first conical surface 210 of the blocking projection 21. Thus, the first communicating port 14 is closed. In case that the blocking projection 21 is worn to some extent due to prolonged service, good abutting condition may still be maintained between the first conical surface 210 of the blocking projection 21 and the first chamfered slope 141, thereby ensuring sealing performance.

In the embodiment of the present application, the end of the blocking projection 21 with the smaller radial dimension may be formed with a chamfered or rounded corner, that is, the end surface of the end of the blocking projection 21 with the smaller radial dimension is transitioned to the first conical surface 210 through the chamfered or rounded transition, such that the first chamfered slope 141 or the rounded curved surface is in a surface contact with the chamfered or rounded corner when closing the valve, therefore improving the sealing effect and extending the service life. During long-term use, the contact position between the blocking projection 21 and the first chamfered slope 141 will be worn, which leads to a change in shape of the first conical surface 210 of the blocking projection 21. After wear occurs, however, it is possible to compensate for the influence of wear by adjusting the abutting pressure between the blocking projection 21 and the first chamfered slope 141, which may also achieve a good sealing effect and prolong the service life.

It should be noted that, of course, in other embodiments, the chamfered or rounded corner on the blocking projection 21 is not necessary and may not be set, and the end surface of the end of the blocking projection with the smaller radial dimension directly intersects with the first conical surface 210, which is not limited herein.

Referring to FIGS. 1-3, in some embodiments of the present application, the inner wall of the valve cavity 11 includes a second conical surface 16 disposed around the first communicating port 14, and the second conical surface 16 is splay in the direction from the first communicating port 14 to the diaphragm 20, that is, the first communicating port 14 is located at a center of the second conical surface 16. The second communicating port 15 is opened on the second conical surface 16 to communicate the valve cavity 11 with the second flow passage 13, and the second communicating port 15 is located below the first communicating port 14, that is, the second communicating port 15 is located below the center of the second conical surface 16. In this way, the medium in the first flow passage 12 enters the valve cavity 11 via the first communicating port 14, and since the second communicating port 15 is located below the center of the second conical surface16, on the one hand, it is possible to increase the opening area of the second communicating port 15, thereby improving the ability to collect the medium and facilitating preventing the medium from remaining in the valve cavity 11; on the other hand, the media on the wall above the center of the second conical surface 16 can move along the second conical surface 16 toward the first communicating port 14, then drops into the second communicating port 15 and enters the second flow passage 13, therefore further thereby improving the ability to collect the medium and facilitating preventing the medium from remaining in the valve cavity 11.

In a specific embodiment, the second flow passage 13 includes a second curved section 131 and a second vertical section 133. The second curved section 131 is communicated with the second communicating port 15 at one end and with the second vertical section 133 at the other end. In this way, by connecting the second communicating port 15 and the second vertical section 133 with the second curved section 131, it is possible to divert the medium entering through the second communicating port 15 into the second vertical section 133 and allow it to flow out downward along the second vertical section 133.

In one embodiment, the outer side 1311 of the second curved section 131 runs in a circular arc, and the inner side 1312 of the second curved section 131 has a diversion surface that is used to divert the media in the valve cavity into the second vertical section 133. In this way, the outer side of the second curved section 131 functions to divert the medium entering through the second communicating port 15 into the second vertical section 133. The second curved section 131 is provided with a diversion surface on its inner side, so that the medium in the valve cavity 11 can flow along the diversion surface to the second vertical section 133 under the action of its own gravity, thus further preventing the medium from remaining in the valve cavity 11.

Optionally, the diversion surface may be a slope. It should be noted that the slope inclines downward from one end close to the valve cavity 11 to one end close to the second vertical section 133 for diversion.

Of course, in another embodiment (for example, in the embodiment shown in FIGS. 1 to 3), the diversion surface may also be a cambered surface formed by rounding. In order to enhance the diversion effect of the diversion surface and further prevent the medium from remaining in the valve cavity 11, the curvature radius of the cambered surface of the inner side 1312 of the second curved section 131 should be as large as possible, and the specific value of the curvature radius may be designed according to actual needs, which is not limit herein.

In the embodiment of the present application, the first flow passage 12 includes a first curved section 121 and a first vertical section 123. One end of the first curved section 121 is communicated with the first communicating port 14, and the other end is communicated with the first vertical section 123. In this way, by connecting the first communicating port 14 and the first vertical section 123 with the first curved section 121, it is possible to divert the medium flowing into the first vertical section 123 into the first communicating port 14, and then allow it to flow into the valve cavity 11.

In the embodiment of the present application, the stop valve further includes a driving mechanism 30 disposed on the valve body 10, and the driving mechanism 30 is in driving connection with the diaphragm 20 to drive the diaphragm 20 to move close to or away from the first communicating port 14, thereby driving the first conical surface 210 of the blocking projection 21 of the diaphragm 20 to abut against or separate from the first chamfered slope 141 or the rounded curved surface and thus closing or unsealing the first communicating port 14. In this way, when it is necessary to close the first communicating port 14, the driving mechanism 30 drives the diaphragm 20 to move close to the first communicating port 14 until the first conical surface 210 of the blocking projection 21 abuts against the first chamfered slope 141 or the rounded curved surface, that is, the first communicating port 14 is closed. When it is necessary to unseal the first communicating port 14, the driving mechanism 30 drives the diaphragm 20 to move away from the first communicating port 14, thereby separating the first conical surface 210 of the blocking projection 21 from the first chamfered slope 141 or the rounded curved surface, and thus unsealing the first communicating port 14.

In a specific embodiment, the driving mechanism 30 includes a housing 31, a piston 32, a connecting member 34, and an elastic member 33. The housing 31 is mounted on the valve body 10 and has a piston chamber 310. The piston 32 is movably disposed within the piston chamber 310 to divide the piston chamber 310 into a first chamber 311 close to the diaphragm 20 and a second chamber 313 away from the diaphragm 20. The connecting member 34 is connected between the diaphragm 20 and the piston 32 so that the diaphragm 20 can move together with the piston 32. The first chamber 311 is configured to be controllably inflated or deflated. The elastic member 33 is disposed in the second chamber 313 and abuts against the piston 32 to provide an elastic force that causes the piston 32 to have a tendency to move close to the diaphragm 20. Optionally, the elastic member 33 may be a spring.

In this way, when it is necessary to unseal the first communicating port 14, the first chamber 311 is controlled to inflate to raise the air pressure inside, so as to drive the piston 32 to move toward the second chamber 313 (at this point, the piston 32 moves over the elastic force provided by the elastic member 33, i.e., The pushing force of the piston 32 by the air pressure in the first chamber 311 is greater than the elastic force provided by the elastic member 33), and then the connecting member 34 drives the blocking projection 21 on the diaphragm 20 away from the first communicating port 14 so that the first conical surface 210 of the blocking projection 21 is separated from the first chamfered slope 141 or the rounded curved surface, thereby unsealing the first communicating port 14. When it is necessary to close the first communicating port 14, the first chamber 311 is controlled to stop inflating to cause the air pressure in the first chamber 311 to drop. At this point, the elastic force provided by the elastic member 33 pushes the piston 32 to move toward the first chamber 311 (at this point, the elastic force provided by the elastic member 33 is greater than the pushing force of the air pressure in the first chamber 311 on the piston 32), and the connecting member 34 drives the diaphragm 20 to move close to the first communicating port 14, until the first conical surface 210 of the blocking projection 21 abuts against the first chamfered slope 141 or the rounded curved surface, thereby closing the first communicating port 14.

In a specific embodiment, the stop valve further includes an assembling block 40 provided between the valve body 10 and the housing 31. The assembling block 40 is enclosed with the valve body 10 to form the valve cavity 11. The assembling block 40, the housing 31, and the piston 32 are enclosed together to form the first chamber 311. The assembling block 40 is opened with a through hole (not shown) for communication with the valve cavity 11 and the first chamber 311, and the through hole is provided for the connecting member 34 to pass through, such that one end of the connecting member 34 entering the valve cavity 11 via the through hole is connected to the diaphragm 20, and one end thereof entering the first chamber 311 via the through hole is connected to the piston 32.

Further, the stop valve further includes a pin 50, whose head is embedded in the diaphragm 20, and the other end of which is in threaded connection with the connecting member 34. That is to say, the connecting member 34 is connected to diaphragm 20 via the pin 50. Of course, in other embodiments, the diaphragm 20 may also be connected to the connecting member 34 in other ways, which is not limited herein.

In a specific embodiment, the valve body 10 has a first annular press-fitting portion (not shown) on its side facing toward the assembling block 40, and the assembling block 40 has a second annular press-fitting portion (not shown) on its side facing toward the valve body 10. The periphery of the diaphragm 20 is compressed between the first annular press-fitting portion and the second annular press-fitting portion, thereby completing the assembly of the diaphragm 20. In this way, when assembling the diaphragm 20, the diaphragm 20 is disposed on the second annular press-fitting portion of the assembling block 40, and the assembling block 40 is then locked onto the valve body 10, such that the first annular press-fitting portion and the second annular press-fitting portion compress and fix the periphery of the diaphragm 20. Optionally, the assembling block 40 can be fastened to the valve body 10 by screws.

Further, the diaphragm 20 divides the valve cavity 11 into a third chamber 110 facing toward the valve body 10 and a fourth chamber 112 facing toward the assembling block 40. The assembling block 40 is opened with a communicating hole 41 for communicating the fourth chamber 112 and the external environment. The first flow passage 12 is communicated with the third chamber 110 through the first communicating port 14, and the second flow passage 13 is communicated with the third chamber 110 through the second communicating port 15. In this way, the medium in the first flow passage 12 enters the third chamber 110 via the first communicating port 14, and the medium entering the third chamber 110 enters the second flow passage 13 via the second communicating port 15. Since the fourth chamber 112 always maintains an air pressure equal to the external environment through the communicating hole 41, it is possible to ensure that the diaphragm 20 can smoothly drive the blocking projection 21 to move close to or away from the first communicating port 14, thereby enabling smooth switching of the stop valve between the valve opened state and the valve closed state.

It should be noted that since the diaphragm 20 separates the third chamber 110 from the fourth chamber 112, the medium entering the third chamber 110 will not enter the fourth chamber 112, but inter the second flow passage 13 via the second communicating port 15.

Further, the driving mechanism 30 further includes an end cover 35, which is connected to an end of the housing 31 away from the assembling block 40 such that the piston 32, the housing 31, and the end cover 35 enclose the above second chamber 313. Optionally, the end cover 35 can be fastened to the housing 31 by means of screws. The opposite ends of the elastic member 33 abut against the piston 32 and the end cover 35, respectively.

In one embodiment, the end cover 35 is opened with a first air-supplying hole 351 for communication with the second chamber 313, the piston 32 is opened with a second air-supplying hole 321 for communication with the second chamber 313 and the first chamber 311. The first air-supplying hole 351 is connected to the second air-supplying hole 321 through an air-supplying tube, and the first air-supplying hole 351 is connected to the external air source through a gas path, such that airflow of the external air source can sequentially pass through the gas path, the first air-supplying hole 351, the air-supplying tube and the second air-supplying hole 321, and enter the first chamber 311, thereby inflating the first chamber 311.

Of course, in another embodiment, an air-supplying hole for communication with the first chamber 311 may also be directly opened on the housing 31 or the assembling block 40. The external air source is connected to the air-supplying hole through the gas path, so that the external air source can inflate the first chamber 311 through the air-supplying hole.

The technical features of the above embodiments can be combined arbitrarily. In order to simplify the description, not all possible combinations of the technical features in the above embodiments are described. However, as long as there is no contradiction between the combinations of these technical features, they should be considered as within the scope of this description.

Although the above embodiments only express illustrated several embodiments of the present application with specific and detailed description, it should not be interpreted as a limitation to the scope of the present application. It should be noted that for those skilled in the art, various modifications and improvements made without departing from the concepts of the present application fall within the protective scope of the present application. Therefore, the protective scope of the present application shall be defined by the appended claims.

## Claims

1. A stop valve, **characterized by** comprising:
a valve body, having a valve cavity, and a first flow passage and a second flow passage both in communication with the valve cavity, the first flow passage running through an inner wall of the valve cavity and forming a first communicating port; and
a diaphragm disposed in the valve cavity and having a blocking projection on a side facing toward the first communicating port;
wherein, the blocking projection has a first conical surface as a peripheral surface thereof, and is of a radial dimension that gradually increases from an end close to the first communicating port to an end away from the first communicating port; the first communicating port has a circumferential edge with a first chamfered slope or a rounded curved surface; the diaphragm can be controlled to drive the blocking projection to move until the first conical surface abuts against the first chamfered slope or the rounded curved surface.

2. The stop valve of claim 1, **characterized in that** a first angle is formed between the first chamfered slope and a central axis of the first communicating port, and a second angle is formed between the first conical surface and the central axis of the first communicating port; and
the first angle is greater than the second angle, and a radial dimension of the end of the blocking projection close to the first communicating port is greater than that of the first communicating port.

3. The stop valve of claim 1, **characterized in that** a first angle is formed between the first chamfered slope and a central axis of the first communicating port, and a second angle is formed between the first conical surface and the central axis of the first communicating port; and
the first angle is equal to the second angle.

4. The stop valve of claim 1, **characterized in that** a first angle is formed between the first chamfered slope and a central axis of the first communicating port, and a second angle is formed between the first conical surface and the central axis of the first communicating port;
the first angle is smaller than the second angle.

5. The stop valve of claim 1, **characterized in that** a first angle is formed between the first chamfered slope and a central axis of the first communicating port, and a second angle is formed between the first conical surface and the central axis of the first communicating port;
the first angle is greater than the second angle, and a radial dimension of the end of the blocking projection close to the first communicating port is smaller than that of the first communicating port, and a radial dimension of the end of the blocking projection away from the first communicating port is greater than that of the first communicating port.

6. The stop valve of any one of claims 1 to 5, **characterized in that** the inner wall of the valve cavity comprises a second conical surface disposed around the first communicating port, and the second conical surface is flared in a direction from the first communicating port to the diaphragm;
the second communicating port is opened on the second conical surface for communication between the valve cavity and the second flow passage, and is positioned below the first communicating port.

7. The stop valve of claim 6, **characterized in that** the second flow passage comprises a second curved section and a second vertical section, and the second curved section at one end thereof communicates with the second communicating port, and communicates at the other end thereof with the second vertical section;
an outer side of the second curved section runs in a circular arc, and an inner side of the second curved section has a diversion surface for diverting medium in the valve cavity into the second vertical section.

8. The stop valve of claim 7, **characterized in that** the diversion surface is a sloped surface.

9. The stop valve of claim 7, **characterized in that** the diversion surface is a cambered surface.

10. The stop valve of any one of claims 1 to 5, **characterized in that** the stop valve further comprises a driving mechanism disposed on the valve body, and the driving mechanism is in driving connection with the diaphragm so as to drive the diaphragm to move close to or away from the first communicating port.

11. The stop valve of claim 10, **characterized in that** the driving mechanism comprises a housing, a piston, a connecting member, and an elastic member;
the housing is mounted on the valve body and has a piston chamber, the piston is movably disposed in the piston chamber so as to divide the piston chamber into a first chamber close to the diaphragm and a second chamber away from the diaphragm, and the connecting member is connected between the diaphragm and the piston;
the first chamber is configured to be controllably inflated or deflated, and the elastic member is disposed within the second chamber and abuts against the piston to provide an elastic force that causes the piston to have a tendency to move close to the diaphragm.

12. The stop valve of claim 11, **characterized in that** the stop valve further comprises an assembling block disposed between the valve body and the housing, the assembling block and the valve body enclose the valve cavity, and the assembling block, the housing, and the piston enclose the first chamber;
the assembling block is opened with a through hole for communication with the valve cavity and the first chamber, and the through hole is provided for the connecting member to pass through.

13. The stop valve of claim 12, **characterized in that** one side of the valve body facing toward the assembling block has a first annular press-fitting portion, one side of the assembling block facing toward the valve body has a second annular press-fitting portion, and a periphery of the diaphragm is compressed between the first annular press-fitting portion and the second annular press-fitting portion.

14. The stop valve of claim 12, **characterized in that** the diaphragm divides the valve cavity into a third chamber facing toward the valve body and a fourth chamber facing toward the assembling block, and the assembling block is opened with a vent hole for communication between the fourth chamber and an external environment.
